# EUROPEAN PATENT SPECIFICATION

(11) **EP 3 446 886 B1**
(45) Date of publication and mention of the grant of the patent: **26.08.2020**
(21) Application number: 17786041.8
(22) Date of filing: 20.04.2017
(51) Int. Cl.: B60C 5/01, B60C 11/01, B60C 11/03, B60C 13/00, B60C 11/00, B60C 5/00, B60C 3/04

(54) **TIRE**
REIFEN
PNEUMATIQUE

(30) Priority: 22.04.2016 JP 2016086227
(43) Date of publication of application: 27.02.2019
(73) Proprietor: Bridgestone Corporation, Tokyo 104-8340 (JP)
(72) Inventor: KOUNO, Yoshihide, Tokyo 104-8340 (JP); MATSUI, Kenji, Tokyo 104-8340 (JP); MATSUMOTO, Yoshifumi, Tokyo 104-8340 (JP); KON, Seiji, Tokyo 104-8340 (JP)
(74) Representative: Oxley, Robin John George
(86) International application number: PCT/JP2017/015948
(87) International publication number: WO 2017/183704

(56) References cited:
- EP-A1- 0 620 131
- WO-A1-2006/134776
- WO-A1-2015/097582
- JP-A- H0 487 802
- JP-A- 2001 018 616
- JP-A- 2004 098 838
- JP-A- 2007 160 982
- JP-A- 2011 042 235
- JP-A- 2012 187 939
- JP-A- 2016 022 902

## Description

### Technical Field

The present disclosure relates to a tire in which a tire frame member is formed of a resin material.

### Background Art

It has been proposed to use a thermoplastic resin, a thermoplastic elastomer or the like as a tire material because of ease of weight reduction and recycling. For example, Japanese Patent Application Laid-Open (JP-A) No. 2011-042235 discloses a pneumatic tire in which a tire frame member is molded using a thermoplastic polymer material.

In the tire, a belt layer having high rigidity including a cord extending in a circumferential direction is provided on an outer circumferential side of the tire frame member.

### SUMMARY OF INVENTION

### Technical Problem

In the tire, a width of the belt layer affects a wear performance of the tire. Since the belt layer has high rigidity, an outer portion of the belt layer in a tire width direction on the outer circumferential portion of the tire, that is, the vicinity of a shoulder portion, protrudes outwardly in a tire diameter direction, and a wear in the vicinity of the shoulder portion tends to progress. In addition, when members are used to suppress the protrusion, the number of members constituting the tire is increased, which leads to an increase in the number of manufacturing processes and an increase in weight of the tire.

The present disclosure has been made in view of the above facts, and aims to suppress a progress of wear in the vicinity of a shoulder portion in a tire having a belt on an outer circumferential portion of a tire frame member formed of a resin material.

### Solution to Problem

A tire according to a first aspect includes: a tire frame member formed of a resin material spanning between one bead portion and the other bead portion, wherein as the resin material configuring the tire frame member (12), a thermoplastic resin having the same elasticity as a rubber, a thermoplastic elastomer (TPE) or a thermosetting resin is used; a belt layer disposed on an outer side of the tire frame member in a tire diameter direction; and a tread disposed on an outer side of the belt layer in the tire diameter direction, wherein, in an outer contour of the tire, as viewed in a cross section along a tire rotation axis, a small arc portion that has a radius of curvature R2 smaller than a radius of curvature R1 of a tire equatorial plane side of the tread, and that is convex toward an outer side of the tire, is provided on an outer side in a tire width direction from a ground end of the tread, and wherein, in the outer contour of the tire, as viewed in the cross section along the tire rotation axis, a ground angle θ of a tangent line of the small arc portion at a height of 80% of a tire cross section height SH with respect to a tire axial direction is set within a range of from 47° to 52°. Advantageous Effects of Invention

As described above, the tire of the present disclosure has an excellent effect that, in the tire having the belt on the outer circumferential portion of the tire frame member formed of the resin material, it is possible to suppress the progress of wear in the vicinity of the shoulder portion.

### BRIEF DESCRIPTION OF DRAWINGS

Fig. 1 is a cross-sectional view showing a pneumatic tire according to an embodiment of the present invention, taken along a rotation axis.
Fig. 2 is a cross-sectional view showing a belt layer.
Fig. 3 is a cross-sectional view showing a tire side portion of a pneumatic tire according to another embodiment of the present invention, taken along a rotation axis.

### DESCRIPTION OF EMBODIMENTS

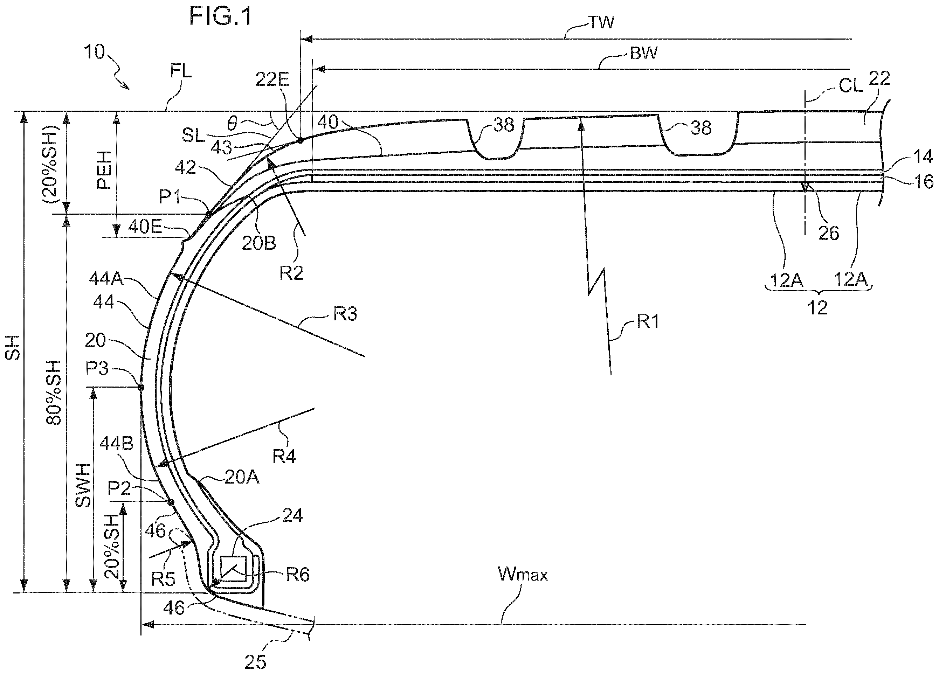

A tire 10 according to an embodiment of the present invention will be described with reference to Fig. 1. Further, the tire 10 according to the present embodiment is for a passenger vehicle.

As illustrated in Fig. 1, the tire 10 according to the present embodiment includes a tire frame member 12, a frame member reinforcing layer 14, a belt layer 16, a side tread 20, and a top tread 22.

### (Tire Frame Member)

The tire frame member 12 is formed of a resin material and is made to be annular by bonding a pair of tire pieces 12A in a tire axial direction on a tire equatorial plane CL. Further, the tire frame member 12 may be formed by bonding three or more tire pieces 12A.

As the resin material configuring the tire frame member 12, a thermoplastic resin having the same elasticity as a rubber, a thermoplastic elastomer (TPE) or a thermosetting resin is used. Considering the elasticity at the time of driving and formability at the time of manufacturing, it is preferable to use the thermoplastic elastomer. Further, all of the tire frame member 12 may be formed of the resin material, or only a part thereof may be formed of the resin material.

Examples of the thermoplastic elastomer can include a polyolefin type thermoplastic elastomer (TPO), a polystyrene type thermoplastic elastomer (TPS), a polyamide type thermoplastic elastomer (TPA), a polyurethane type thermoplastic elastomer (TPU), a polyester type thermoplastic elastomer (TPC), a dynamic crosslinking thermoplastic elastomer (TPV), and the like.

In addition, examples of the thermoplastic resin can include a polyurethane resin, a polyolefin resin, a vinyl chloride resin, a polyamide resin, and the like. In addition, the thermoplastic materials, for example, having a deflection temperature under load (at 0.45 MPa load) defined in ISO 75-2 or ASTM D648 of 78 °C or more, a tensile yield strength defined in JIS K7113 of 10 MPa or more, a tensile elongation at break (JIS K7113) defined in JIS K7113 of 50% or more, and a Vicat softening temperature (method A) defined in JIS K7206 of 130 °C or more can be used.

In the tire frame member 12, a bead core 24 is buried in an inner end portion in the tire diameter direction. As a material constituting the bead core 24, a metal, an organic fiber, an organic fiber coated with a resin, a hard resin, or the like can be used. Further, in the tire frame member 12, the vicinity of the bead core 24 is formed to be thick so that the bending rigidity becomes higher than other portions. Further, if there is no problem in fitting the tire with a rim 25, the bead core 24 may be omitted.

A resin bonding member 26 is provided on the tire equatorial plane CL between the pair of tire pieces 12A of the tire frame member 12 and the other tire piece 12A of the tire frame member 12. The pair of tire pieces 12A are welded and bonded to each other through the bonding member 26.

Further, as the resin used for the bonding member 26, the same or different thermoplastic material as the tire piece 12A can be used. In addition, the tire pieces 12A can be bonded by a welding agent, an adhesive agent, or the like without using the bonding member 26.

### (Belt Layer)

The belt layer 16 is provided on an outer circumferential surface of the tire frame member 12. When a width dimension of the belt layer 16 measured along the tire axial direction is BW and a ground width dimension measured of the top tread 22 along the tire axial direction is TW, the width dimension BW of the belt layer 16 is set within a range of from 85% to 105% of the ground width dimension TW of the top tread 22.

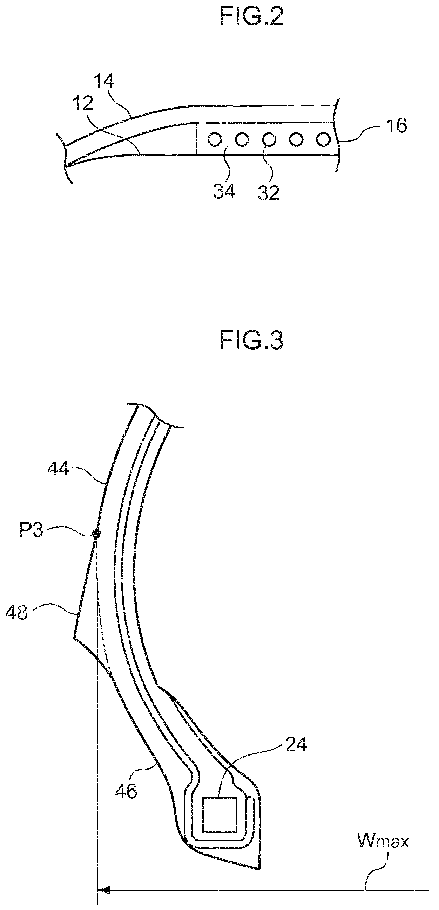

As illustrated in Fig. 2, the belt layer 16 is configured to include a cord 32 extending along a tire circumferential direction. Specifically, the belt layer 16 is configured by winding the cord 32 covered with a resin 34 in a spiral shape in the tire circumferential direction. The cord 32 is a multifilament (stranded wire), but may be a monofilament (single wire). Note that "extending along the tire circumferential direction" as used herein means that an angle with respect to the tire circumferential direction may extend at 5° or less.

For the cord 32, a non-extensible cord can be used. Herein, the non-extensible cord means a cord in which the total extension amount until breaking is small, for example, an elongation at the time of breaking is less than 4%. "Elongation at the time of breaking" means a value calculated from a result obtained by performing a tensile test according to JIS Z 2241.

In the cord 32 of the present embodiment, a steel cord is used as the non-extensible cord, but a cord other than steel such as an aromatic polyamide cord may be used.

As the resin 34 covering the cord 32, the same or different thermoplastic material as the tire piece 12A can be used. Further, the tire frame member 12 and the resin 34 of the belt layer 16 are welded to each other.

As shown in Fig. 1, the ground width dimension TW of the top tread 22 is a dimension obtained by measuring from one ground end 22E to the other ground end 22E along the tire width direction when the tire 10 is fit to a standard rim defined in the JATMA YEAR BOOK (Japan Automobile Tire Manufactures Association Standard 2016 version), the internal pressure of 100% of the air pressure (maximum air pressure) corresponding to the maximum load capacity (bold type load in the internal pressure-load capacity correspondence table) in the applicable size and the rating in the JATMA YEAR BOOK is filled, and the maximum load capacity is loaded.

### (Frame Member Reinforcing Layer)

A frame member reinforcing layer 36 is disposed on a tire outer side surface side of the tire frame member 12. The frame member reinforcing layer 36 extends along an outer surface of the tire frame member 12 from an inner side of the bead core 24 in the tire diameter direction to an outer side in the tire diameter direction and further extends beyond the tire equatorial plane CL to an inner side of an opposite of the side bead core 24 (not shown) in the tire diameter direction.

The frame member reinforcing layer 36 includes a plurality of reinforcing cords (not shown) covered with a rubber (not shown). The reinforcing cords of the frame member reinforcing layer 36 are monofilaments (single wire) of an organic fiber or multifilaments (stranded wire) twisted with the organic fiber, and each extend in a radial direction and are arranged in parallel in the tire circumferential direction. Further, the reinforcing cord of the frame member reinforcing layer 36 may be inclined at an angle of 10° or less with respect to the tire diameter direction when viewed from a side of the tire.

In the frame member reinforcing layer 36 of the present embodiment is formed by attaching one ply in which the plurality of reinforcing cords arranged in parallel to one another are covered with the rubber (unvulcanized) to the outer circumferential surface of the molded tire frame member 12.

As the reinforcing cord of the frame member reinforcing layer 14, for example, a polyester cord, a nylon cord, a PET cord, an aromatic polyamide cord, or the like can be used. Further, as a material of the reinforcing cord of the frame member reinforcing layer 14, a metal such as steel may be used. Further, the reinforcing cord of the frame member reinforcing layer 14 may be covered with a resin instead of the rubber.

### (Side Tread)

A pair of side treads 20 is provided on an outer surface of the frame member reinforcing layer 36. As the side tread 20, it is possible to use the same kind as the rubber used for a side wall of the conventional rubber pneumatic tire.

Further, an end portion 20A of an inner side of the side tread 20 in the tire radial direction extends to the inner side of the bead core 24 in the tire diameter direction. In addition, an end portion 20B of the side tread 20 in the tire radial direction outer side is located in a shoulder portion 42.

### (Top Tread)

A top tread 22 as a tread is disposed on the outer side of the frame member reinforcing layer 14 in the tire radial direction. The top tread 22 is formed of a rubber having better wear resistance than the resin material forming the tire frame member 12 and the same kind as the tread rubber used for the conventional rubber pneumatic tire can be used. Further, in a tread surface of the top tread 22, a circumferential groove 38 extending in the tire circumferential direction for drainage and a lug groove 40 extending in the tire width direction are formed.

The lug groove 40 extends beyond the ground end 22E toward the outside in the tire width direction and terminates near an outer end portion of a tire side portion 44 in the tire diameter direction. It is preferable that a pattern end height dimension PEH of an end 40E of the lug groove 40 in the tire width direction is within the range of from 23% to 30% of a tire cross section height SH. Further, the pattern end height dimension PEH is a height dimension obtained by measuring inwardly in the tire diameter direction from an imaginary line FL parallel to the tire rotation axis to an end 40E in the tire width direction passing through a point at which the ground surface of the top tread 22 and the tire equatorial plane CL intersect with each other.

The tire 10 of the present embodiment is manufactured by disposing the belt layer 16 and the frame member reinforcing layer 36 on the outer surface of the tire frame member 12 which has been molded in advance, obtaining a green tire in which the unvulcanized rubber which later becomes the side tread 20 and the top tread 22 is disposed on an outer surface of the green tire, loading the green tire into a vulcanization mold, and vulcanizing and molding the green tire. Further, as the frame member reinforcing layer 14 disposed on the outer surface of the tire frame member 12, the reinforcing cord covered with the unvulcanized rubber is used.

Further, in the tire 10 of the present embodiment, the ground surface of the top tread 22 refers to a region between one ground end 22E of the top tread 22 and the other ground end 22E of the top tread 22.

The shoulder portion 42 of the tire 10 of the present embodiment is between a position P1 of a height of 80% of the tire cross section height SH from a reference line BL measuring the tire cross section height SH (the line passing through a bead heel and parallel to the tire rotation axis) toward the outside in the tire diameter direction and the ground end 22E.

The tire side portion 44 of the tire 10 of the present embodiment is between a position P2 of the 20% of the tire cross section height SH from the reference line BL measuring the tire cross section height SH toward the outside in the tire diameter direction and the position P1.

Further, in the tire side portion 44, it is preferable that a tire diameter direction height SWH of a tire maximum width position P3 measured from the reference line BL toward the outside in the tire diameter direction is set to be within the range of from 40% to 45% of the tire cross section height SH.

Further, the bead portion 46 of the tire 10 of the present embodiment refers to an inner side portion in the tire diameter direction from the position P2 of 20% of the tire cross section height SH.

When the tire 10 is viewed in a cross section along the tire rotation axis, an outer contour of the top tread 22 is an arc shape which is convex toward the outer side of the tire and a radius of curvature (average value) on the tire equatorial plane CL side is set to R1.

An outer contour of the shoulder portion 42, which is the side of the ground end 22E of the top tread 22, has a small arc portion 43 which is convex toward the outer side of the, tire and a radius of curvature R2 of the arc portion is smaller than the radius of curvature R1 on the tire equatorial plane CL side of the top tread 22.

An outer contour of the tire side portion 44 is an arc shape which is convex toward the outer side of the tire, a radius of curvature (average value) of an outer portion 44A in the tire diameter direction of the outer side of the tire maximum width position P3 in the tire diameter direction is set to R3, and a radius of curvature (average value) of an inner portion 44B in the tire diameter direction of the inside of the tire maximum width position P3 in the tire diameter direction is set to R4 which is smaller than the radius of curvature (average value) R3 of the outer portion 44A in the tire diameter direction.

Further, the tire maximum width position P3 is the maximum width of the tire 10 at the regular internal pressure filling and no load, which is the maximum width at a side outer contour not including a rim guard, a convex character and the like.

In addition, the radius of curvature R2 of the above-described shoulder portion 42 is set to be smaller than the radius of curvature R3 of the outer portion 44A in the tire diameter direction and the radius of curvature R4 of the inner portion 44B in the tire diameter direction. In addition, in the tire 10 of the present embodiment, a ground angle θ is set within the range of from 47° to 52°. The ground angle θ in the present embodiment means an inclined angle of a tangent line SL of the outer contour of the small arc portion 43 of the shoulder portion 42 with respect to the tire axial direction at the position P1 of 80% of the tire cross section height SH at the side portion of the tire 10.

Further, the bead portion 46 has an arc shape which is convex toward the inside of the tire, and a radius of curvature of the bead portion 46 is set to R5. In addition, the bead heel portion 46A of the bead portion 46 has an arc shape which is convex toward the outer side of the tire, and a radius of curvature of the bead heel portion 46A is set to R6. Both of the radius of curvature R5 and the radius of curvature R6 are smaller than the radius of curvature R2 of the shoulder portion 42.

### (Action and Effect)

In the tire 10 of the present embodiment, since the belt layer 16 having high rigidity is provided between the tire frame member 12 formed of the resin material and the top tread 22 formed of a rubber, in other words, on the outer circumferential portion of the tire frame member 12, the tire frame member 12 is pressed inwardly in the tire diameter direction by a hoop effect of the belt layer 16 at a portion where the belt layer 16 is provided, and the protrusion of the outer side of the top tread 22 in the tire diameter direction can be suppressed.

On the other hand, in the outer circumferential portion of the tire frame member 12, the portion where the belt layer 16 is not provided, in other words, in the shoulder portion 42, since there is no hoop effect for pressing the tire frame member 12 toward the inside in the tire diameter direction, the portion in which the belt layer 16 is not provided tends to protrude to the outside in the tire diameter direction comparing to a portion in which the belt layer 16 is provided.

However, in the tire 10 of the present embodiment, since the radius of curvature of the shoulder portion 42 is small and the ground angle θ is within the range of from 47° to 52°, the inclined angle of the outer contour of the shoulder portion 42 from the ground end 22E toward the tire side portion 44 with respect to the tire rotational axial relatively rapidly increases. Therefore, even if the shoulder portion 42 protrudes to the outside in the tire diameter direction, it is difficult to ground the road surface. As a result, dragging of the shoulder portion 42 against the road surface is suppressed, and the progress of wear of the shoulder portion 42 is effectively suppressed.

In the tire 10 of the present embodiment, by simply setting the outer contour shape to an appropriate shape, the progress of wear of the shoulder portion 42 can be suppressed without increasing the number of members constituting the tire 10, increasing the number of manufacturing processes, or increasing the weight.

Further, in a case in which the ground angle θ is less than 47°, when the tire 10 rotates and the shoulder portion 42 protrudes, the shoulder portion 42 easily grounds the road surface, and the effect of suppressing the progress of wear of the shoulder portion 42 decreases. On the other hand, when the ground angle θ exceeds 52°, a connection between the outer contour of the shoulder portion 42 and the outer contour of the tire side portion 44 deteriorates. In other words, with an inflection point at a boundary between the outer contour of the shoulder portion 42 and the outer contour of the tire side portion 44 as a boundary, an angle difference between a direction of the outer contour of the shoulder portion 42 and a direction of the outer contour of the tire side portion 44 is increased so that a large depression is generated at the inflection point and stress concentrates at the inflection point.

Here, if the radius of curvature R2 of the outer contour of the tire of the shoulder portion 42 is simply reduced under the condition that the ground width dimension TW and the tire maximum width Wmax are determined in the tire 10, an interval between the bead portions 46 continuing to the inner side in the tire diameter direction via the tire side portion 44 is narrowed so that the tire 10 cannot be correctly mounted on the rim 25 having a prescribed width in some cases. However, in the tire 10 of the present embodiment, by setting the radius of curvature of the outer contour of the tire of the tire side portion 44 (the radius of curvature R3 of the outer portion 44A in the tire diameter direction and the radius of curvature R4 of the inner portion 44B in the tire diameter direction) located in the inner side of the shoulder portion 42 in the tire diameter direction to be larger, even if the radius of curvature R2 of the outer contour of the tire of the shoulder portion 42 is reduced, the interval between the bead portions 46 can be prevented from narrowing, and the tire 10 can be properly mounted on the rim 25 having a prescribed width.

By setting the radius of curvature R3 of the outer portion 44A in the tire diameter direction to be relatively large and the radius of curvature R4 of the inner portion 44B in the tire diameter direction to be relatively small in the tire side portion 44, under the condition that the ground width dimension TW of the tire 10, the tire maximum width Wmax, and a rim width of the rim 25 are set to predetermined values corresponding to the tire size, an outer contour having an arc shape of the outer portion 44A in the tire diameter direction and an outer contour having an arc shape of the inner portion 44B in the tire diameter direction can be smoothly connected to each other, in other words, the outer contour having the arc shape of the outer portion 44A in the tire diameter direction and the outer contour having the arc shape of the inner portion 44B in the tire diameter direction can be connected to each other without passing through inflection points.

By setting the tire diameter direction height SWH of the tire maximum width position P3 to be within the range of from 40 %to 45% of the tire cross section height SH, under the condition that the ground width dimension TW of the tire 10, the tire maximum width Wmax, and the rim width of the rim 25 are set to predetermined values corresponding to the tire size, the outer contour having the arc shape of the outer portion 44A in the tire diameter direction and the outer contour having the arc shape of the inner portion 44B in the tire diameter direction can be smoothly connected to each other, in other words, the outer contour having the arc shape of the outer portion 44A in the tire diameter direction and the outer contour having the arc shape of the inner portion 44B in the tire diameter direction can be connected to each other without passing through the inflection points.

Further, in the tire 10 of the present embodiment, a pattern end height dimension PEH of the end 40E of the lug groove 40 in the tire width direction is set to 23% to 30% of the cross section width SH of the tire. At the time of cornering, since the lug grooves 40 extending to the shoulder portion 42 beyond the ground end 22E can be grounded to the road surface and the lug grooves 40 can be hooked on the road surface, it is possible to improve traction property during cornering.

### (Test Example)

In order to confirm the effect of the present invention, the tire of the example to which the present invention was applied and the tire of the comparative example were prototyped and a wear test was carried out.

Wear Test: Wear resistance (wear life) and wear appearance (presence or absence of uneven wear) were confirmed by an actual vehicle test
Internal Pressure: Vehicle Specification Condition
Load: Vehicle Setting Load
Test Method: After running a certain distance under conditions simulating each market, measure the wear amount and wear appearance.

The specifications of the tire used for the test are described below.

The tire used for the test was different only in the shape of the outer contour, and the constituent members are all the same specification (same as the above embodiment).
Tire Size: 225/40R18
Size of Rim 7.5 J
Internal Pressure: 250 kPa
Ground Width 180 mm
Tire Maximum Width 228 mm

The results of the test are described in Table 1 below.

**[Table 1]**

| | Tire 1 | Tire 2 | Tire 3 | Tire 4 | Tire 5 |
|---|---|---|---|---|---|
| Ground Angle (°) | 45 | 47 | 50 | 52 | 54 |
| Wear Test Evaluation | Occurrence of Uneven Wear Due to Shoulder Ground | No Defective Appearance | No Defective Appearance | No Defective Appearance | Occurrence of Uneven Wear Due to of Non-uniform Ground Pressure of Shoulder End |

From the test results, it can be seen that the tires 2 to 4 having the ground angle θ within the range of from 47° to 52° are excellent in wear resistance in the vicinity of the shoulder of the tread.

### [Other Embodiments]

Hereinabove, although the embodiment of the present invention has been described, the present invention is not limited to the above embodiment, and various modifications can be made without departing from the scope of the present invention according to the appended claims.

Further, in the tire 10 of the above embodiment, the tire side portion 44 is not provided with the rim guard, but as shown in Fig. 3, the tire side portion 44 may be provided with a rim guard 48 that protrudes to the outside in the tire width direction than an outer contour line (two-dot chain line) of the tire side portion 44.

Although the tire 10 of the above embodiment is for passenger vehicles, the present invention is also applicable to tires other than the passenger vehicles.

## Claims

1. A tire (10) comprising:
a tire frame member (12) formed of a resin material spanning between one bead portion (46) and the other bead portion (46), wherein as the resin material configuring the tire frame member (12), a thermoplastic resin having the same elasticity as a rubber, a thermoplastic elastomer (TPE) or a thermosetting resin is used;
a belt layer (16) disposed on an outer side of the tire frame member (12) in a tire diameter direction; and
a tread disposed on an outer side of the belt layer (16) in the tire diameter direction,
**characterised in that**, in an outer contour of the tire (10), as viewed in a cross section along a tire rotation axis, a small arc portion that has a radius of curvature (R2) smaller than a radius of curvature (R1) of a tire equatorial plane (CL) side of the tread, and that is convex toward an outer side of the tire (10), is provided on an outer side in a tire width direction from a ground end (22E) of the tread, wherein
in the outer contour of the tire (10), as viewed in the cross section along the tire rotation axis, a ground angle θ of a tangent line of the small arc portion at a height of 80% of a tire cross section height (SH) with respect to a tire axial direction is set within a range of from 47° to 52°.

2. The tire (10) according to claim 1, wherein the radius of curvature (R2) of the outer contour of the tire (10), which is convex toward the outer side of the tire (10) at a tire side portion (44) located on an inner side of the small arc portion in the tire diameter direction, is larger than the radius of curvature (R2) of the outer contour of the tire (10) of the small arc portion.

3. The tire (10) according to claim 1 or 2, wherein a tire diameter direction height (SWH) of a tire maximum width position is within a range of from 40% to 45% of the tire cross section height (SH).

4. The tire (10) of any one according to claims 1 to 3, wherein, in the outer contour of the tire (10), which is convex toward the outer side of the tire (10) in a tire side portion (44), when a radius of curvature between a tire maximum width position and the small arc portion is R3 and a radius of curvature on an inner side in the tire diameter direction from the tire maximum width position is R4, R3 > R4.

5. The tire (10) of any one according to claims 1 to 4, wherein:
a lug groove (40) extending toward the outer side in the tire width direction from the inner side in the tire width direction is formed in the tread, and
a pattern end height dimension (PEH) obtained by measuring inwardly in the tire diameter direction, from an imaginary line parallel to the tire rotation axis passing through a point where the tread and the tire equatorial plane (CL) intersect to an end (40E) of the lug groove (40) in the tire width direction, is within a range of from 23% to 30% of a cross section height (SH) of the tire equatorial plane (CL).

## Patentansprüche

1. Reifen (10), der Folgendes umfasst:
ein Reifenrahmenelement (12), das aus einem Harzmaterial geformt ist, wobei es sich zwischen dem einen Wulstabschnitt (46) und dem anderen Wulstabschnitt (46) spannt, wobei als das Harzmaterial, welches das Reifenrahmenelement (12) bildet, ein thermoplastisches Harz, das die gleiche Elastizität wie ein Gummi aufweist, ein thermoplastisches Elastomer (TPE) oder ein warm aushärtendes Harz verwendet wird,
eine Gürtellage (16), die auf einer in einer Reifendurchmesserrichtung äußeren Seite des Reifenrahmenelements (12) angeordnet ist, und
eine Lauffläche, die auf einer in der Reifendurchmesserrichtung äußeren Seite der Gürtellage (16) angeordnet ist,
**dadurch gekennzeichnet, dass**,
in einem äußeren Umriss des Reifens (10), gesehen in einem Querschnitt entlang einer Reifendrehachse, ein kleiner Bogenabschnitt, der einen Krümmungsradius (R2), kleiner als ein Krümmungsradius (R1) einer Seite der Reifenäquatorialebene (CL) der Lauffläche, aufweist und der zu einer äußeren Seite des Reifens (10) hin konvex ist, auf einer in einer Reifenbreitenrichtung äußeren Seite von einem Bodenende (22E) der Lauffläche bereitgestellt wird, wobei,
in dem äußeren Umriss des Reifens (10), gesehen in dem Querschnitt entlang der Reifendrehachse, ein Bodenwinkel θ einer Tangente des kleinen Bogenabschnitts bei einer Höhe von 80 % einer Reifenquerschnittshöhe (SH) in Bezug auf eine Reifenaxialrichtung innerhalb eines Bereichs von 47° bis 52° festgesetzt ist.

2. Reifen (10) nach Anspruch 1, wobei der Krümmungsradius (R2) des äußeren Umrisses des Reifens (10), der zu der äußeren Seite des Reifens (10) hin konvex ist, an einem Reifenseitenabschnitt (44), der auf einer in der Reifendurchmesserrichtung inneren Seite des kleinen Bogenabschnitts angeordnet ist, größer ist als der Krümmungsradius (R2) des äußeren Umrisses des Reifens (10) des kleinen Bogenabschnitts.

3. Reifen (10) nach Anspruch 1 oder 2, wobei eine Höhe (SWH) in Reifendurchmesserrichtung einer Position maximaler Reifenbreite innerhalb eines Bereichs von 40 % bis 45 % der Reifenquerschnittshöhe (SH) liegt.

4. Reifen (10) nach einem der Ansprüche 1 bis 3, wobei in dem äußeren Umriss des Reifens (10), der zu der äußeren Seite des Reifens (10) hin konvex ist, in einem Reifenseitenabschnitt (44), wenn ein Krümmungsradius zwischen einer Position maximaler Reifenbreite und dem kleinen Bogenabschnitt R3 ist und ein Krümmungsradius auf einer in der Reifendurchmesserrichtung inneren Seite von der Position maximaler Reifenbreite R4 ist, R3 > R4.

5. Reifen (10) nach einem der Ansprüche 1 bis 4, wobei:
eine Stollenrille (40), die sich von der in der Reifenbreitenrichtung inneren Seite zu der in der Reifenbreitenrichtung äußeren Seite hin erstreckt, in der Lauffläche geformt ist und
eine Profilende-Höhenabmessung (PEH), erhalten durch Messen in der Reifendurchmesserrichtung nach innen, von einer imaginären Linie, parallel zu der Reifendrehachse, die durch einen Punkt hindurchgeht, wo sich die Lauffläche und die Reifenäquatorialebene (CL) schneiden, bis zu einem Ende (40E) der Stollenrille (40) in der Reifenbreitenrichtung, innerhalb eines Bereichs von 23% bis 30 % einer Querschnittshöhe (SH) der Reifenäquatorialebene (CL) liegt.

## Revendications

1. Bandage pneumatique (10, comprenant :
un élément de cadre du bandage pneumatique (12) composé d'un matériau de résine, s'étendant entre une partie de talon (46) et une autre partie de talon (46), dans lequel est utilisé, comme matériau de résine configurant l'élément de cadre du bandage pneumatique (12), une résine thermoplastique présentant la même élasticité qu'un caoutchouc, un élastomère thermoplastique (TPE) ou une résine thermodurcissable ;
une couche de ceinture (16) disposée sur un côté externe de l'élément de cadre du bandage pneumatique (12), dans une direction du diamètre du bandage pneumatique ; et
une bande de roulement disposée sur un côté externe de la couche de ceinture (12), dans la direction du diamètre du bandage pneumatique ;
**caractérisé en ce que** :
dans un contour externe du bandage pneumatique (10), vu dans une section transversale le long d'un axe de rotation du bandage pneumatique, une petite partie en arc ayant un rayon de courbure (R2), inférieur à un rayon de courbure (R1) d'un côté du plan équatorial du bandage pneumatique (CL) de la bande de roulement, convexe vers un côté externe du bandage pneumatique (10), est agencée sur un côté externe, dans une direction de la largeur du bandage pneumatique, à partir d'une extrémité de contact au sol (22 E) de la bande de roulement, dans lequel :
dans le contour externe du bandage pneumatique (10), vu dans la section transversale le long de l'axe de rotation du bandage pneumatique, un angle de contact au sol θ d'une ligne tangentielle de la petite partie en arc, au niveau d'une hauteur représentant 80% d'une hauteur de section transversale du bandage pneumatique (SH) par rapport à une direction axiale du bandage pneumatique, est ajusté dans un intervalle allant de 47° à 52°.

2. Bandage pneumatique (10) selon la revendication 1, dans lequel le rayon de courbure (R2) du contour externe du bandage pneumatique (10), convexe vers le côté externe du bandage pneumatique (10) au niveau d'une partie latérale du bandage pneumatique (44) agencée sur un côté interne de la petite partie en arc, dans la direction du diamètre du bandage pneumatique, est supérieur au rayon de courbure (R2) du contour externe du bandage pneumatique (10) de la petite partie en arc.

3. Bandage pneumatique (10) selon les revendications 1 ou 2, dans lequel une hauteur (SWH), dans une direction du diamètre du bandage pneumatique, d'une position à largeur maximale du bandage pneumatique, est comprise dans un intervalle représentant 40% à 45% de la hauteur de section transversale du bandage pneumatique (SH).

4. Bandage pneumatique (10) selon l'une quelconque des revendications 1 à 3, dans lequel, dans le contour externe du bandage pneumatique (10), convexe vers le côté externe du bandage pneumatique (10) dans une partie latérale du bandage pneumatique (44), lorsqu'un rayon de courbure entre une position à largeur maximale du bandage pneumatique et la petite partie en arc correspond à R3, un rayon de courbure sur un côté interne, dans la direction du diamètre du bandage pneumatique, de la position à largeur maximale du bandage pneumatique, correspond à R4, R3 > R4.

5. Bandage pneumatique selon l'une quelconque des revendications 1 à 4, dans lequel :
une rainure à barrettes (40) s'étendant vers le côté externe, dans la direction de la largeur du bandage pneumatique, à partir du côté interne, dans la direction de la largeur du bandage pneumatique, est formée dans la bande de roulement ; et
une dimension de hauteur d'une extrémité de la sculpture (PEH) établie en mesurant vers l'intérieur, dans la direction du diamètre du bandage pneumatique, d'une ligne imaginaire parallèle à l'axe de rotation du bandage pneumatique, passant à travers un point d'intersection de la bande de roulement et du plan équatorial du bandage pneumatique (CL) vers une extrémité (40E) de la rainure à barrettes (40), dans la direction de la largeur du bandage pneumatique, est comprise dans un intervalle représentant 23% à 30% d'une hauteur de section transversale (SH) du plan équatorial du bandage pneumatique (CL).
